# FASCICULE DE BREVET EUROPEEN

(11) **EP 3 802 156 B1**
(45) Date de publication et mention de la délivrance du brevet: **06.07.2022**
(21) Numéro de dépôt: 19742432.8
(22) Date de dépôt: 14.05.2019
(51) Int. Cl.: B60C 11/12, B60C 11/11, B60C 11/03

(54) **BANDE DE ROULEMENT DE PNEUMATIQUE POUR VEHICULE LOURD DE TYPE GÉNIE CIVIL COMPRENANT DES INCISIONS DE VENTILATION**
REIFENLAUFFLÄCHE FÜR EIN SCHWERES TIEFBAUFAHRZEUG MIT LÜFTUNGSEINSCHNITTEN
TYRE TREAD FOR A HEAVY CIVIL-ENGINEERING-TYPE VEHICLE, COMPRISING VENTILATION INCISIONS

(30) Priorité: 31.05.2018 FR 1854673
(43) Date de publication de la demande: 14.04.2021
(73) Titulaire: COMPAGNIE GENERALE DES ETABLISSEMENTS MICHELIN, 63000 Clermont-Ferrand (FR)
(72) Inventeur: SPINNLER, Olivier, 63040 CLERMONT-FERRAND Cedex 9 (FR); DE-TULLIO, Murielle, 63040 CLERMONT FERRAND Cedex 9 (FR); NUGIER, Franck, 63040 CLERMONT FERRAND Cedex 9 (FR)
(74) Mandataire: Millanvois, Patrick Jacques Jean
(86) Numéro de dépôt international: PCT/FR2019/051083
(87) Numéro de publication internationale: WO 2019/229315

(56) Documents cités:
- DE-A1- 3 738 159
- FR-A1- 3 028 805
- JP-A- 2003 104 012
- JP-A- 2004 322 800
- JP-A- 2006 347 468
- JP-A- 2010 120 586

## Description

La présente invention concerne un pneumatique, destiné à équiper un véhicule lourd de type génie civil, et a plus particulièrement pour objet la bande de roulement d'un tel pneumatique.

Un pneumatique pour véhicule lourd de type génie civil est destiné à être monté sur une jante dont le diamètre nominal, au sens de la norme ETRTO (European Tyre and Rim Technical Organisation), est au moins égal à 25 pouces. Bien que non limitée à ce type d'application, l'invention est plus particulièrement décrite en référence à un pneumatique radial, destiné, par exemple, à être monté sur un dumper, véhicule de transport de matériaux extraits de carrières ou de mines de surface.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions «radialement intérieur », respectivement « radialement extérieur» signifient «plus proche », respectivement « plus éloigné de l'axe de rotation du pneumatique». Par «axialement intérieur », respectivement « axialement extérieur», on entend «plus proche », respectivement « plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial pour véhicule lourd de type génie civil comprend radialement de l'extérieur vers l'intérieur une bande de roulement, une armature de sommet, constituée par une superposition radiale de couches de sommet comprenant des renforts métalliques, et une armature de carcasse radiale, constituée le plus souvent par une couche de carcasse unique comprenant des renforts métalliques. L'ensemble constitué par la bande de roulement et l'armature de sommet constitue le sommet du pneumatique.

La bande de roulement est la partie du sommet du pneumatique destinée à entrer en contact avec un sol par l'intermédiaire d'une surface de roulement et à être usée. La bande de roulement comprend au moins un matériau élastomérique et un système plus ou moins complexe de découpures séparant des éléments en relief, appelé sculpture, pour assurer notamment une performance satisfaisante en adhérence.

Les découpures de la bande de roulement peuvent avoir tout type d'orientation par rapport à la direction circonférentielle du pneumatique. On distingue usuellement les découpures longitudinales ou circonférentielles formant, avec la direction circonférentielle, un angle au plus égal à 45°, et les découpures axiales ou transversales formant, avec la direction circonférentielle, un angle au moins égal à 45°. Parmi les découpures, on distingue les rainures et les incisions. Une rainure est une découpure définissant un espace délimité par des parois de matière en regard et distantes l'une de l'autre, de telle sorte que lesdites parois ne peuvent pas entrer en contact l'une avec l'autre lors du passage de la bande de roulement dans le contact avec le sol, lorsque le pneumatique est en roulage sous des conditions de charge et de pression nominales recommandées. Une incision est une découpure définissant un espace délimité par des parois de matière pouvant entrer en contact l'une avec l'autre lors du roulage dans les mêmes conditions que celles précédemment décrites.

Les éléments en relief de la bande de roulement s'étendent à partir d'une surface de fond jusqu'à la surface de roulement, selon une direction radiale perpendiculaire à la surface de roulement, et sont séparés les uns des autres par des découpures. Les éléments en relief sont soit des nervures, s'étendant circonférentiellement sur toute la périphérie du pneumatique, soit des blocs, délimités par des faces latérales coupant la surface de roulement et par une face de contact appartenant à la surface de roulement. Chaque bloc a, selon la direction radiale, une hauteur radiale H et, selon la direction circonférentielle tangente à la surface de roulement selon un sens de rotation du pneumatique, une longueur circonférentielle moyenne B, mesurée dans sa face de contact.

La bande de roulement est généralement caractérisée géométriquement par une largeur axiale W_{T}, une épaisseur radiale H_{T} et une longueur circonférentielle L_{T}. La largeur axiale W_{T} est définie comme la largeur axiale de la surface de contact de la bande de roulement du pneumatique neuf avec un sol lisse, le pneumatique étant soumis à des conditions de pression et de charge telles que recommandées, par exemple, par la norme E.T.R.T.O. (European Tyre and Rim Technical Organization). L'épaisseur radiale H_{T} est définie, par convention, comme la profondeur radiale maximale mesurée dans les découpures, lorsque le pneumatique est à l'état neuf. Dans le cas d'un pneumatique pour véhicule lourd de type génie civil, et à titre d'exemple, la largeur axiale W_{T} est au moins égale à 500 mm et l'épaisseur radiale H_{T} est au moins égale à 50 mm. La longueur circonférentielle L_{T} est la longueur développée de la bande de roulement, égale à la circonférence extérieure du pneumatique à l'état neuf.

Pour analyser les performances de la bande d'un roulement d'un pneumatique, telles que, par exemple, l'usure, l'adhérence, la résistance aux agressions, la performance thermique, il est usuel de considérer que la bande de roulement peut être décomposée, selon la direction axiale parallèle à l'axe de rotation du pneumatique, en une partie médiane et deux parties latérales positionnées axialement de part d'autre de la partie médiane. A titre indicatif, une partie médiane de bande de roulement a une largeur axiale W_{M} au moins égale à 30% et au plus égale à 80% de la largeur axiale W_{T} de la bande de roulement et chaque partie latérale a une largeur axiale W_{L} au moins égale à 10% et au plus égale à 35% de la largeur axiale W_{T} de la bande de roulement.

Les conditions usuelles de roulage, en termes de pression, de charge et de vitesse, pour un pneumatique pour véhicule lourd de type génie civil sont généralement sévères. Il en résulte, dans la surface de contact de la bande roulement avec le sol, des sollicitations mécaniques, qui, combinées avec la forte épaisseur radiale de la bande de roulement et les caractéristiques thermomécaniques des matériaux élastomériques constituant la bande de roulement, telles que l'hystérèse, génèrent des températures élevées dans le sommet du pneumatique. Ces échauffements importants, générés dans le sommet du pneumatique, peuvent causer des endommagements des composants du sommet et limiter son endurance, et par conséquent la durée de vie du pneumatique, avec un retrait prématuré du pneumatique. La diminution du niveau thermique du sommet du pneumatique est par conséquent une préoccupation constante du concepteur de pneumatique pour véhicule lourd de type génie civil.

Pour diminuer le niveau thermique du sommet du pneumatique, il est connu, d'après notamment les documents EP 2655093 A1, WO 2015/140122 A1 et WO 2018/096259 A1, de former, dans les éléments en relief d'une bande de roulement de type blocs, des cavités ouvertes sur la surface de roulement et aptes à créer une ventilation pour évacuer les calories générées lors du roulage.

Le document EP 2655093 A1 décrit ainsi une bande de roulement avec des blocs comprenant des cavités ayant une profondeur, ou hauteur radiale, au plus égale à 25% de la hauteur radiale H du bloc, en vue d'améliorer l'usure thermique des blocs.

Le document WO 2015/140122 A1 décrit également une bande de roulement avec des blocs comprenant des cavités ayant une profondeur, ou hauteur radiale, au moins égale à 30% et, préférentiellement, au moins égale à 50% de la hauteur totale de matière à user, correspondant sensiblement à la hauteur radiale du bloc, en vue de refroidir la bande de roulement.

Enfin le document WO 2018/096259 A1 décrit une bande de roulement avec des blocs comprenant des cavités ayant une profondeur, ou hauteur radiale, au moins égale à 70% de la hauteur totale de matière à user, correspondant sensiblement à la hauteur radiale du bloc, en vue de refroidir la bande de roulement. Ces cavités comprennent en outre une première partie de cavité, située entre la surface de roulement et un niveau de profondeur intermédiaire situé entre 30 % et 70 % de la profondeur maximale de la cavité, et une deuxième partie de cavité prolongeant la première partie de cavité jusqu'au fond de la cavité. Pour la première partie de cavité, l'angle de dépouille moyen de la paroi délimitant la cavité de ventilation est au moins égal à 20°, alors que, pour la deuxième partie de cavité, l'angle de dépouille moyen de la paroi délimitant la cavité de ventilation est au plus égal à 15°. Cette géométrie optimisée de cavité permet de favoriser les échanges thermiques entre les parties massives de la bande de roulement et l'air environnant tout en réduisant les risques d'agression par des corps étrangers susceptibles d'entrer dans ces cavités et d'y rester captifs. D'autres bandes de roulement de pneumatiques pour véhicules lourds de type génie civil sont décrites dans les documents FR 3028805 A1, JP 2010 120586 A et JP 2006 347468 A.

Les inventeurs se sont donnés pour objectif de réduire le niveau thermique des blocs de la bande de roulement d'un pneumatique pour véhicule lourd de type génie civil, tout en garantissant un bon niveau de protection de la bande de roulement vis-à-vis des agressions mécaniques.

Cet objectif a été atteint par une bande de roulement de pneumatique pour véhicule lourd de type génie civil, destinée à entrer en contact avec un sol par l'intermédiaire d'une surface de roulement et constituée d'au moins un matériau élastomérique,
- la bande roulement comprenant des blocs en relief, s'étendant à partir d'une surface de fond jusqu'à la surface de roulement, selon une direction radiale perpendiculaire à la surface de roulement, et séparés les uns des autres par des découpures,
- chaque bloc étant délimité par des faces latérales, coupant la surface de roulement, et par une face de contact, appartenant à la surface de roulement,
- chaque bloc ayant, selon la direction radiale, une hauteur radiale H et, selon une direction circonférentielle tangente à la surface de roulement selon un sens de rotation du pneumatique, une longueur circonférentielle moyenne B, mesurée dans sa face de contact,
- au moins un bloc comprenant au moins une incision débouchant sur sa face de contact et intérieure à ses faces latérales,
- chaque incision ayant, selon la direction radiale, une hauteur radiale H_{I}, mesurée à partir de la face de contact, au moins égale à 0.4 fois et au plus égale à 0.9 fois la hauteur radiale H du bloc,
- chaque incision débouchant sur la face de contact selon une section débouchante ayant un périmètre fermé L_{I} au moins égal à 1 fois et au plus égal à 3 fois la longueur circonférentielle moyenne B du bloc et une épaisseur E_{I} au moins égale à 0.08 fois et au plus égale à 0.2 fois la hauteur radiale H_{I} de l'incision,
- chaque incision comprenant un ensemble de pontages, comprenant au moins un pontage, chaque pontage s'étendant à partir de la surface de fond de l'incision, selon la direction radiale, sur une hauteur radiale Hp au moins égale à 0.3 fois et au plus égale à 1 fois la hauteur radiale H_{I} de l'incision et ayant une longueur L_{P}, mesurée dans un plan perpendiculaire à la direction radiale,
- et l'ensemble de pontages ayant une longueur cumulée LCp, définie comme la somme des longueurs Lp des pontages, au moins égale à 0.1 fois et au plus égal à 0.4 fois le périmètre fermé L_{I} de la section débouchante de l'incision.

La présence d'au moins une incision dans un bloc de la bande de roulement permet une ventilation interne du bloc et donc une baisse significative de sa température interne par rapport à un bloc massif dépourvu d'incision. En outre, la surface débouchante de l'incision ayant une section limitée, la quantité de matière de la face de contact du bloc avec incision est proche de celle d'un bloc sans incision. Par conséquent, la protection du sommet du pneumatique vis-à-vis des agressions de la bande de roulement est sensiblement équivalente à celle obtenue avec une bande de roulement avec des blocs sans incision. Enfin, l'incision comprend un ensemble de pontages qui relie le plot de matière, délimité par l'incision, au reste du bloc et confère au plot de matière une rigidité suffisante, pour éviter l'apparition de formes d'usure irrégulière au niveau de l'incision qui constitue une discontinuité de matière du bloc.

Selon une première caractéristique essentielle de l'invention, au moins un bloc comprend au moins une incision débouchant sur sa face de contact et intérieure à ses faces latérales. Une incision selon l'invention débouche ainsi sur la face de contact du bloc, mais pas sur les autres faces, auxquelles elle reste intérieure.

Selon une deuxième caractéristique essentielle de l'invention, chaque incision a, selon la direction radiale, une hauteur radiale H_{I}, mesurée à partir de la face de contact, au moins égale à 0.4 fois et au plus égale à 0.9 fois la hauteur radiale H du bloc. En deçà de la valeur minimale de hauteur radiale de l'incision, la surface d'échange thermique pour la ventilation est insuffisante. Au-delà de la valeur maximale de hauteur radiale de l'incision, le bloc risque d'être fragilisé mécaniquement par une découpe trop importante.

Selon une troisième caractéristique essentielle de l'invention, chaque incision débouchant sur la face de contact selon une section débouchante a un périmètre fermé L_{I} au moins égal à 1 fois et au plus égal à 3 fois la longueur circonférentielle moyenne B du bloc et une épaisseur E_{I} au moins égale à 0.08 fois et au plus égale à 0.2 fois la hauteur radiale H_{I} de l'incision. Un périmètre fermé de la section débouchante, défini comme la longueur curviligne de la ligne moyenne fermée de la section débouchante, permet une circulation d'air à l'intérieur de l'incision. Le périmètre fermé de la section débouchante de l'incision, ainsi que l'épaisseur de la surface débouchante de l'incision, définie comme la distance entre les parois de l'incision, doivent être respectivement supérieurs à des valeurs minimales pour garantir une surface débouchante suffisante pour la ventilation thermique, et doivent être respectivement inférieurs à des valeurs maximales pour avoir une surface débouchante pas trop grande et ne pas fragiliser la tenue mécanique du bloc.

Selon une quatrième caractéristique essentielle de l'invention, chaque incision comprend un ensemble de pontages, comprenant au moins un pontage, chaque pontage s'étendant à partir de la surface de fond de l'incision, selon la direction radiale, sur une hauteur radiale Hp au moins égale à 0.3 fois et au plus égale à 1 fois la hauteur radiale H_{I} de l'incision et ayant une longueur L_{P}, mesurée dans un plan perpendiculaire à la direction radiale et définie comme la longueur curviligne de la trace du pontage dans ce plan. Un ensemble de pontages relie le plot de matière, délimité par l'incision, au reste du bloc et confère au plot de matière une rigidité suffisante évitant l'apparition de formes d'usure irrégulière au niveau du plot de matière. Lorsque la hauteur radiale du pontage est égale à la hauteur radiale de l'incision, la surface débouchante, qui a une ligne moyenne fermée, est toutefois discontinue, c'est-à-dire partiellement obturée, du fait de l'affleurement des pontages au niveau de la face de contact.

Enfin, selon une cinquième caractéristique essentielle de l'invention, l'ensemble de pontages a une longueur cumulée LCp, définie comme la somme des longueurs Lp des pontages, au moins égale à 0.1 fois et au plus égal à 0.4 fois le périmètre fermé L_{I} de la surface débouchante de l'incision. En deçà de la valeur minimale de longueur cumulée, la rigidification du plot de matière, délimité par l'incision, est insuffisante. Au-delà de la valeur maximale de longueur cumulée, l'ensemble de pontages risque de perturber la circulation de l'air dans l'incision et donc la ventilation thermique attendue.

Préférentiellement chaque bloc, comprenant au moins une incision, comprend une seule incision.

Un bloc à incision unique comprend, par conséquent, un plot de matière unique à l'intérieur de l'incision. En revanche, pour un bloc à plusieurs incisions, les surfaces débouchantes des incisions ont généralement des périmètres inférieurs à celui de la surface débouchante d'une incision unique et les plots de matière correspondants, intérieurs à ces incisions, sont plus petits qu'un plot de matière unique et, par conséquent, moins rigides et moins résistants aux arrachements que le plot de matière unique. Dans le cas où la longueur cumulée des périmètres des surfaces débouchantes des petites incisions est égale à la longueur du périmètre de la surface débouchante de l'incision unique, la capacité de ventilation interne du bloc est sensiblement équivalente entre un bloc à plusieurs incisions et un bloc à incision unique, mais avec une plus grande robustesse aux arrachements pour le bloc à incision unique.

Selon un mode de réalisation préféré de la section débouchante de l'incision, la face de contact du bloc ayant un centre de gravité G, le périmètre fermé L_{I} de la section débouchante de l'incision est inscrit dans une enveloppe convexe entourant le centre de gravité G de la face de contact du bloc.

Le fait que le centre de gravité de la face de contact du bloc soit positionné à l'intérieur de l'enveloppe convexe du périmètre fermé de la section débouchante de l'incision implique que le périmètre fermé est positionné sensiblement dans une zone centrale du bloc ayant le niveau thermique le plus élevé.

Selon une première variante préférée du mode de réalisation préféré de la section débouchante de l'incision, le périmètre fermé L_{I} de la section débouchante de l'incision est un cercle.

Le cercle est en effet une forme convexe qui, pour un périmètre fermé de section débouchante donné, maximise le rayon minimal du périmètre fermé de la section débouchante de l'incision, ce qui minimise le risque d'initiation de fissure au niveau de l'incision. De plus une incision circulaire confère au plot de matière, intérieur à l'incision, une rigidité équivalente dans toutes les directions, ce qui minimise le risque d'usure irrégulière.

Selon une deuxième variante avantageuse du mode de réalisation préféré de la section débouchante de l'incision, la face de contact du bloc ayant un contour, le périmètre fermé L_{I} de la section débouchante de l'incision a une forme obtenue par un décalage du contour de la face de contact du bloc.

Dans ce cas, les points du périmètre fermé L_{I} de la section débouchante de l'incision sont obtenus par un décalage constant des points du contour de la face de contact, vers l'intérieur de la face de contact, de telle sorte que le périmètre fermé L_{I} est parallèle au contour de la face de contact. Ainsi le périmètre fermé de la surface débouchante de l'incision et, par conséquent la surface d'échange thermique par ventilation, sont répartis de façon homogène dans le bloc.

Selon une troisième variante avantageuse du mode de réalisation préféré de la section débouchante de l'incision, le périmètre fermé L_{I} de la section débouchante de l'incision a, en tout point, un rayon de courbure au moins égal à 2 fois l'épaisseur E_{I} de la section débouchante de l'incision.

Une valeur de rayon de courbure, en tout point du périmètre fermé de la section débouchante de l'incision, supérieure à un minimum, permet de minimiser le risque d'initiation de fissure au niveau de l'incision. La forme du périmètre fermé de la section débouchante peut être choisie, par exemple, selon une des deux variantes du mode de réalisation préféré de la section débouchante de l'incision précédemment décrites.

L'ensemble de pontages comprend plusieurs pontages identiques équirépartis selon le périmètre fermé L_{I} de la section débouchante de l'incision.

Une équirépartition des pontages identiques selon le périmètre fermé L_{I} de la section débouchante de l'incision, c'est-à-dire une répartition régulière de pontages de même longueur Lp selon un pas constant, garantit une répartition homogène de la rigidification du plot de matière.

Selon un mode de réalisation préféré de l'ensemble de pontages de l'incision, l'ensemble de pontages comprend un nombre impair, au moins égal à 3, de pontages identiques et équirépartis.

Dans le cas d'un ensemble de pontages avec équirépartition de pontages identiques, le choix d'un nombre impair de pontages permet de garantir la présence d'un pontage selon toute direction perpendiculaire à la direction radiale et donc une bonne homogénéité de la rigidification du plot de matière sur toute sa circonférence. En d'autres termes, toute droite coupant l'axe radial du plot de matière intercepte toujours une zone pontée. Au contraire, dans le cas d'un nombre pair de pontages, il existe des droites coupant l'axe radial du plot de matière qui n'interceptent aucun pontage, ce qui correspond à des directions sans rigidification du plot de matière.

Avantageusement la hauteur radiale Hp de chaque pontage varie entre les incisions respectives de deux blocs distincts.

Des hauteurs radiales de pontage, variant selon les blocs, confèrent aux pontages une fonction d'indicateur d'usure caractérisant plusieurs niveaux d'usure, en fonction de la disparition de l'incision dans tel ou tel bloc. L'atteinte d'un niveau d'usure donné peut être ainsi un signal pour le remplacement du pneumatique ou pour sa permutation d'un essieu avant à un essieu arrière du véhicule.

La bande de roulement de pneumatique comprenant, selon la direction axiale, une partie médiane séparant deux parties latérales, les blocs des parties latérales comprennent avantageusement au moins une incision.

Il est connu de l'homme du métier que les sources de chaleur proviennent des sollicitations de cisaillement en extrémité d'armature de sommet, d'une part, et des déformations des blocs de la bande de roulement, d'autre part. Cette génération de chaleur est d'autant plus importante que la vitesse de roulage est élevée et que les caractéristiques d'hystérèse des mélanges élastomériques présents dans le sommet, et plus particulièrement du mélange élastomérique de la bande de roulement, sont élevées. La présence d'au moins une incision dans les blocs des parties latérales est particulièrement avantageuse, dans le cas d'un roulage à vitesse élevée et à forte charge entrainant une génération de chaleur principalement par cisaillement aux extrémités de l'armature de sommet positionnées radialement à l'intérieur et à l'aplomb des blocs des parties latérales.

La bande de roulement de pneumatique comprenant, selon la direction axiale, une partie médiane séparant deux parties latérales, les blocs de la partie médiane comprennent également avantageusement au moins une incision.

La présence d'au moins une incision dans les blocs de la partie médiane est particulièrement avantageuse, dans le cas d'un roulage à vitesse élevée, à pression élevée et à charge faible. En effet, ces conditions de roulage sont particulièrement sollicitantes pour la partie médiane de la bande de roulement, car elles entrainent, de façon prépondérante, des déformations des blocs de la partie médiane et donc une génération de chaleur principalement dans ces blocs. Ces conditions de roulage se rencontrent, par exemple, pour des véhicules transportant du charbon, de relativement faible densité, dans les mines de charbon.

La présence d'au moins une incision dans tous les blocs la bande de roulement, c'est-à-dire à la fois dans ceux de la partie médiane et ceux des parties latérales, est avantageuse, dans le cas où tous les blocs de la bande de roulement subissent des déformations importantes et où les caractéristiques d'hystérèse des mélanges élastomériques présents dans le sommet, et plus particulièrement du mélange élastomérique de la bande de roulement, sont élevées.

Avantageusement les blocs ont une hauteur radiale H au moins égale à 50 mm.

Sur des sols agressifs, une hauteur radiale de bloc, supérieure à une valeur minimale égale à 50 mm, protège le sommet du pneumatique contre les chocs et les coupures. Sur un sol boueux glissant, une hauteur radiale de bloc, supérieure à une valeur minimale égale à 50 mm, garantit une bonne performance en motricité et en adhérence.

Préférentiellement les blocs ont un ratio H/B au moins égal à 0.3 et au plus égal à 0.7.

Plus le ratio H/B du bloc, représentant l'élancement du bloc selon la direction circonférentielle, est grand, plus le bloc est souple et déformable en cisaillement, selon la direction circonférentielle, ce qui limite le basculement du bloc sous couple et, par conséquent, l'apparition de formes d'usure irrégulière. Plus le ratio H/B du bloc est petit, moins le bloc est souple et déformable en cisaillement, selon la direction circonférentielle, ce qui limite la génération de chaleur dans le bloc et, par conséquent, le niveau thermique, ce qui garantit une meilleure endurance du sommet. La plage de valeurs spécifiée permet donc d'obtenir un compromis satisfaisant entre les performances respectivement vis-à-vis de l'usure irrégulière et vis-à-vis du niveau thermique.

L'invention a également pour objet un pneumatique pour véhicule lourd de type génie civil comprenant une bande de roulement selon l'un des modes de réalisation précédemment décrits.

Les caractéristiques de l'invention seront mieux comprises à l'aide des figures 1, 2A, 2B, 3, 4, 5A et 5B schématiques et non à l'échelle :
- Figure 1: Vue de dessus d'une bande de roulement d'un pneumatique pour véhicule lourd de type génie civil selon l'invention.
- Figure 2A: Vue de dessus d'un bloc de bande de roulement selon l'invention.
- Figure 2B: Coupe méridienne d'un bloc de bande roulement selon l'invention.
- Figure 3: Vue de dessus d'une bande de roulement d'un pneumatique pour véhicule lourd de type génie civil selon l'invention, avec des incisions positionnées uniquement dans les blocs des parties latérales de la bande de roulement.
- Figure 4: Vue de dessus d'une bande de roulement d'un pneumatique pour véhicule lourd de type génie civil selon l'invention, avec des incisions positionnées uniquement dans les blocs de la partie médiane de la bande de roulement.
- Figure 5A: Vue de dessus d'un bloc de bande de roulement selon l'invention, avec une surface débouchante d'incision de forme oblongue.
- Figure 5B: Vue de dessus d'un bloc de bande de roulement selon l'invention, avec une surface débouchante d'incision déduite par un décalage du contour de la face de contact du bloc.

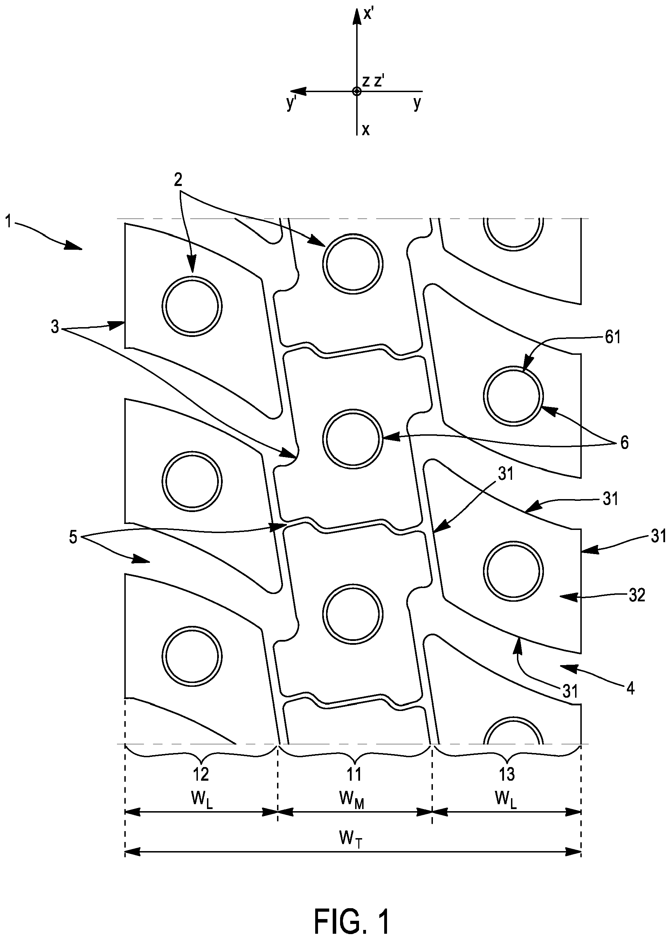

La figure 1 représente une partie de bande de roulement 1 de pneumatique pour véhicule lourd de type génie civil, destinée à entrer en contact avec un sol par l'intermédiaire d'une surface de roulement 2 et constituée d'au moins un matériau élastomérique. La bande de roulement de pneumatique 1, ayant une largeur axiale W_{T}, comprend, selon la direction axiale YY', perpendiculaire à la direction circonférentielle XX', une partie médiane 11, ayant une largeur axiale W_{M}, séparant deux parties latérales (12, 13), ayant chacune une largeur axiale W_{L}. La bande de roulement 1 comprend en outre des blocs en relief 3, s'étendant à partir d'une surface de fond 4 jusqu'à la surface de roulement 2, selon une direction radiale ZZ' perpendiculaire à la surface de roulement 2. Les blocs en relief 3 sont séparés les uns des autres par des découpures 5. Chaque bloc 3 est délimité par des faces latérales 31, coupant la surface de roulement 2, et par une face de contact 32, appartenant à la surface de roulement 2. Dans le mode de réalisation représenté, chaque bloc 3 comprend une unique incision 6 intérieure à ses faces latérales 31 et débouchant sur sa face de contact 32, selon une section débouchante 61 ayant un périmètre fermé, ou ligne moyenne fermée, circulaire.

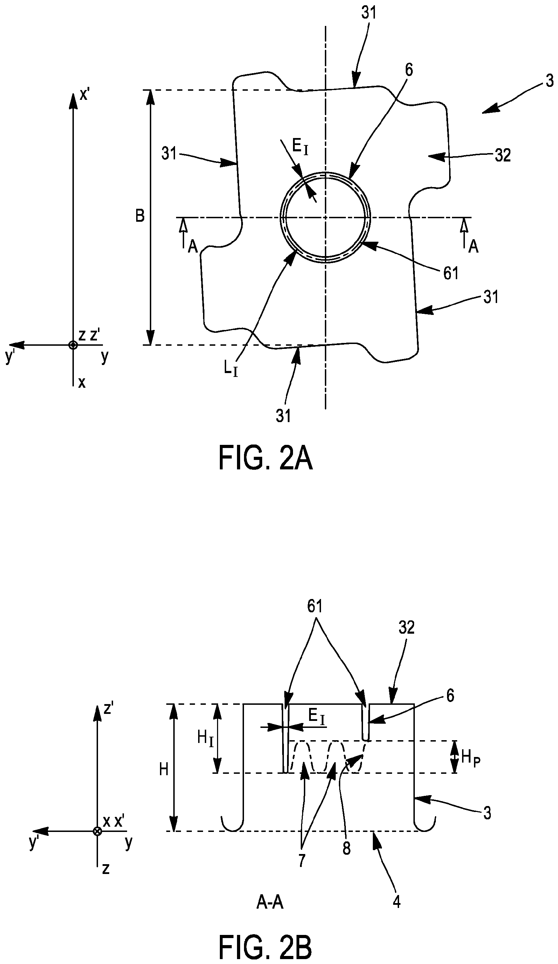

Les figures 2A et 2B représentent respectivement une vue de dessus et une coupe méridienne d'un bloc de bande de roulement selon l'invention. Sur la figure 2A, le bloc 3 a, selon une direction circonférentielle XX' tangente à la surface de roulement 2 selon un sens de rotation du pneumatique, une longueur circonférentielle moyenne B, mesurée dans sa face de contact 32. Le bloc 3 comprend une unique incision 6 intérieure à ses faces latérales 31 et débouchant sur sa face de contact 32. L'incision 6 débouche sur la face de contact 32 selon une section débouchante 61 ayant un périmètre fermé L_{I}, de forme circulaire, au moins égal à 1 fois et au plus égal à 3 fois la longueur circonférentielle moyenne B du bloc 3 et une épaisseur E_{I} au moins égale à 0.08 fois et au plus égale à 0.2 fois la hauteur radiale H_{I} de l'incision 6 (représentée sur la figure 2B). Sur la figure 2B, représentant une coupe méridienne du bloc 3, c'est-à-dire selon un plan méridien YZ, le bloc 3 a une hauteur radiale H, mesurée selon la direction radiale ZZ entre la surface de fond 4 et la face de contact 32. L'incision 6 a, selon la direction radiale ZZ', une hauteur radiale H_{I} au moins égale à 0.4 fois et au plus égale à 0.9 fois la hauteur radiale H du bloc 3, cette hauteur radiale H_{I} étant mesurée à partir de la face de contact 32 radialement vers l'intérieur du bloc 3. L'incision 6 comprend en outre un ensemble de pontages 7, comprenant plusieurs pontages 8. Chaque pontage 8 s'étend à partir de la surface de fond de l'incision 6, selon la direction radiale ZZ', sur une hauteur radiale Hp au moins égale à 0.3 fois et au plus égale à 1 fois la hauteur radiale H_{I} de l'incision 6 et a une longueur Lp, mesurée dans un plan XY perpendiculaire à la direction radiale ZZ' et définie comme la longueur curviligne de la trace du pontage dans ce plan. L'ensemble de pontages 7 a une longueur cumulée LCp (non représentée), définie comme la somme des longueurs Lp des pontages 8, au moins égale à 0.1 fois et au plus égal à 0.4 fois le périmètre fermé L_{I} la surface débouchante 61 de l'incision 6. En outre l'ensemble de pontages 7 comprend plusieurs pontages 8 identiques équirépartis selon le périmètre fermé L_{I} de la section débouchante 61 de l'incision 6, en nombre impair égal à 5.

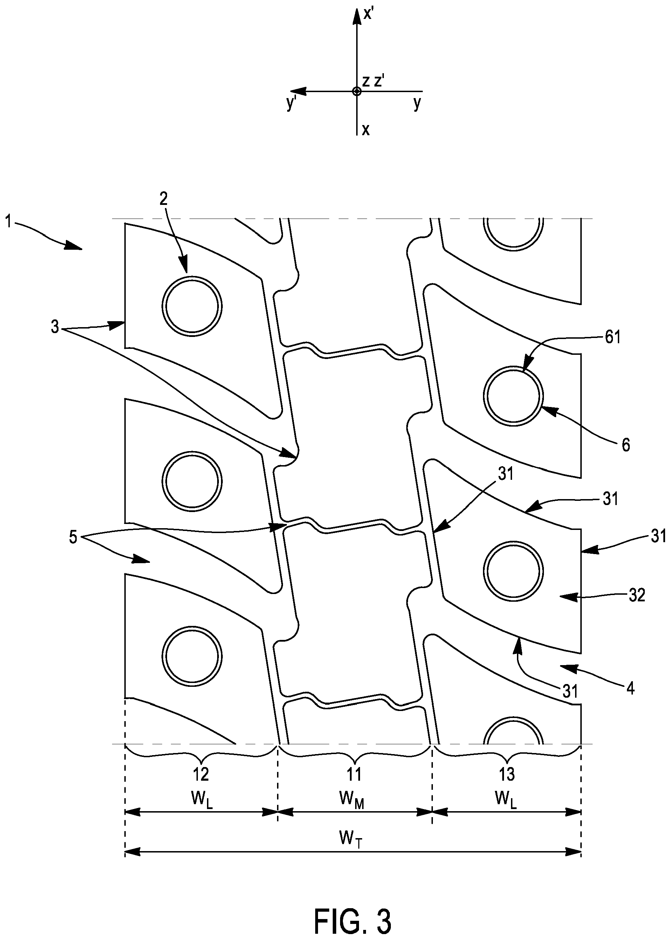

La figure 3 est une vue de dessus d'une partie de bande de roulement 1 d'un pneumatique pour véhicule lourd de type génie civil selon l'invention, selon un mode de réalisation particulier avec des incisions 6 uniques et circulaires positionnées uniquement dans les blocs 3 des parties latérales (12, 13) de la bande de roulement 2. Comme décrit précédemment, la présence d'une incision 6 dans les blocs 3 des parties latérales (12, 13) est particulièrement avantageuse, par exemple, pour un pneumatique roulant à vitesse élevée et à forte charge et soumis à une génération de chaleur principalement par cisaillement en extrémité d'armature de sommet.

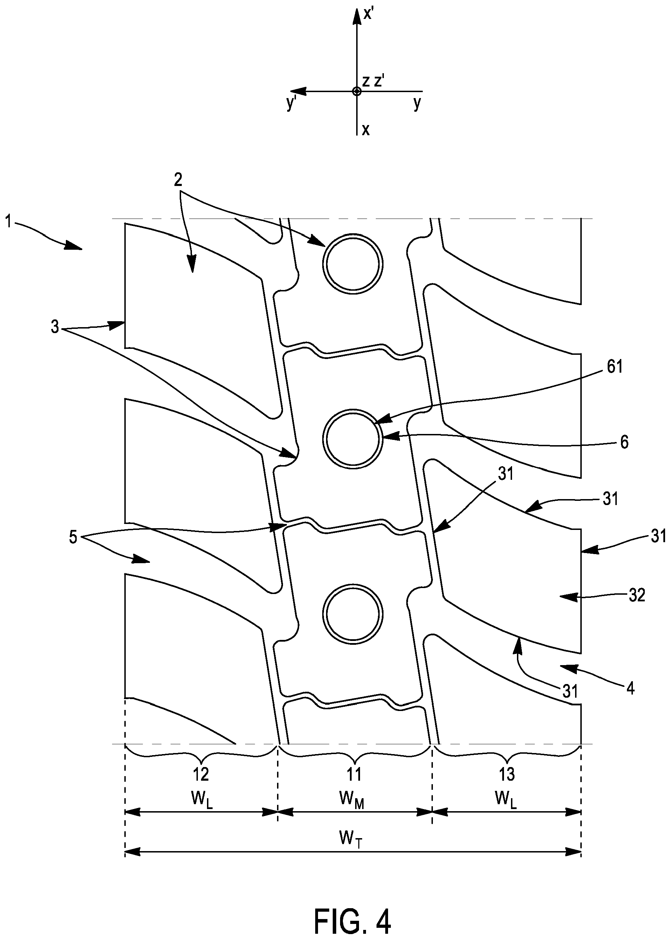

La figure 4 est une vue de dessus d'une partie de bande de roulement 1 d'un pneumatique pour véhicule lourd de type génie civil selon l'invention, selon un mode de réalisation particulier avec des incisions 6 uniques et circulaires positionnées uniquement dans les blocs 3 de la partie médiane 11 de la bande de roulement 2. Comme décrit précédemment, la présence d'une incision 6 dans les blocs 3 de la partie médiane 11 est particulièrement avantageuse, par exemple, pour un pneumatique roulant à vitesse élevée, à pression élevée et à charge faible.

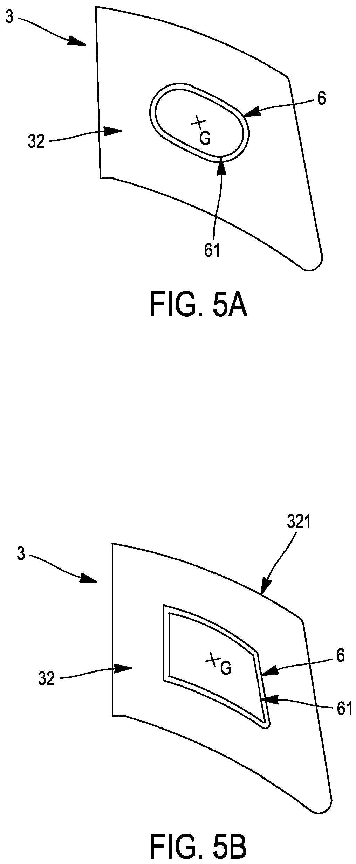

La figure 5A est une vue de dessus d'un bloc 3 de bande roulement selon l'invention, comprenant une incision unique 6 avec, dans la face de contact 32, une surface débouchante 61 ayant périmètre fermé de forme oblongue. Le périmètre fermé de la section débouchante 61, constituant une enveloppe convexe, entoure le centre de gravité G de la face de contact 32.

La figure 5B est une vue de dessus d'un bloc 3 de bande de roulement selon l'invention, comprenant une incision unique 6 avec, dans la face de contact 32, une surface débouchante 61 ayant un périmètre fermé obtenu par un décalage du contour 321 de la face de contact 32. Les points du périmètre fermé de la section débouchante 61 sont obtenus par un décalage constant des points du contour 321 de la face de contact 32, vers l'intérieur de la face de contact 32, de telle sorte que le périmètre fermé est parallèle au contour 321 de la face de contact 32, d'où une répartition de la surface d'échange thermique par ventilation homogène dans le bloc 3. Le périmètre fermé de la section débouchante 61, constituant une enveloppe convexe, entoure le centre de gravité G de la face de contact 32.

L'invention a plus particulièrement été étudiée pour un pneumatique de dimension 30.00R51, destiné à équiper un dumper rigide. Le tableau 1 ci-dessous présente les caractéristiques de la sculpture de la bande de roulement d'un tel pneumatique selon l'invention, ainsi que les performances thermiques obtenues par rapport à un pneumatique ayant la même sculpture de bande de roulement mais sans incision.

**Tableau 1**

| **Caractéristiques** | **Dimension 30.00 R 51** |
|---|---|
| Hauteur radiale du bloc **H** | 85 mm |
| Longueur circonférentielle moyenne du bloc **B** | 188 mm |
| Rapport **H/B** | 0.45 |
| Hauteur radiale de l'incision **H_{I}** | 58 mm |
| Rapport **H_{I}**/**H** | 0.68 |
| Epaisseur de la surface débouchante de l'incision **E_{I}** | 5.7 mm |
| Rapport **E_{I}** / **H_{I}** | 0.10 |
| Périmètre fermé de la surface débouchante de l'incision **L_{I}** | 265 mm |
| Rapport **L_{I}** / **B** | 1.41 |
| Hauteur radiale de pontage **H_{P}** | 20 mm (bloc latéral) / 41 mm (bloc médian) |
| Rapport **H_{P}**/ **H_{I}** | 0.34 (bloc latéral) / 0.71 (bloc médian) |
| Longueur cumulée de l'ensemble de pontages **LC_{P}** | 46.5 mm (bloc latéral) / 42 mm (bloc médian) |
| Ecarts de températures pour une bande de roulement avec incisions par rapport une bande de roulement sans incisions (Simulation à pression de gonflage P=6 b, sous charge Z=26.8 t, et à vitesse V=20 kph) | -21 °C (bloc médian)/ -7 °C (bloc latéral) |
| Ecarts de températures pour une bande de roulement avec incisions par rapport une bande de roulement sans incisions (Mesure à pression de gonflage P=6 b, sous charge Z=26.2 t, et à vitesse V=20 kph) | -16 °C (bloc médian)/ -9 °C (bloc latéral) |

La bande de roulement du pneumatique de l'exemple ci-dessus comprend des incisions circulaires uniques dans tous les blocs de la partie médiane et des parties latérales. Les performances thermiques ont été simulées par des calculs par éléments finis, puis mesurées sur un véhicule, pour un pneumatique selon l'invention et pour un pneumatique de référence ayant une bande de roulement identique mais sans incision. Le gain thermique estimé par simulation, pour la bande de roulement de pneumatique selon l'invention, est de 7 °C dans la partie médiane de la bande de roulement, et de 21 °C dans les parties latérales de la bande de roulement, pour un pneumatique soumis à une pression de gonflage P égale à 6 b, sous une charge appliquée Z égale à 26.8 t, et roulant à une à vitesse V égale 20 kph (kilomètres par heure). Le gain thermique mesuré, pour la bande de roulement de pneumatique selon l'invention, est de 16 °C dans la partie médiane de la bande de roulement, et de 9 °C dans les parties latérales de la bande de roulement, pour un pneumatique soumis à une pression de gonflage P égale à 6 b, sous une charge appliquée Z égale à 26.2 t, et roulant à une à vitesse V égale 20 kph (kilomètres par heure).

## Revendications

1. Bande de roulement (1) de pneumatique pour véhicule lourd de type génie civil, destinée à entrer en contact avec un sol par l'intermédiaire d'une surface de roulement (2) et constituée d'au moins un matériau élastomérique,
la bande roulement (1) comprenant des blocs en relief (3), s'étendant à partir d'une surface de fond (4) jusqu'à la surface de roulement (2), selon une direction radiale (ZZ') perpendiculaire à la surface de roulement (2), et séparés les uns des autres par des découpures (5),
chaque bloc (3) étant délimité par des faces latérales (31), coupant la surface de roulement (2), et par une face de contact (32), appartenant à la surface de roulement (2),
chaque bloc (3) ayant, selon la direction radiale (ZZ'), une hauteur radiale H et, selon une direction circonférentielle (XX') tangente à la surface de roulement (2) selon un sens de rotation du pneumatique, une longueur circonférentielle moyenne B, mesurée dans sa face de contact (32),
**caractérisée en ce qu'au** moins un bloc (3) comprend au moins une incision (6) débouchant sur sa face de contact (32) et intérieure à ses faces latérales (31),
**en ce que** chaque incision (6) a, selon la direction radiale (ZZ'), une hauteur radiale H_{I}, mesurée à partir de la face de contact (32), au moins égale à 0.4 fois et au plus égale à 0.9 fois la hauteur radiale H du bloc (3),
**en ce que** chaque incision (6) débouche sur la face de contact (32) selon une section débouchante (61) ayant une périmètre fermé L_{I} au moins égal à 1 fois et au plus égal à 3 fois la longueur circonférentielle moyenne B du bloc (3) et une épaisseur E_{I} au moins égale à 0.08 fois et au plus égale à 0.2 fois la hauteur radiale H_{I} de l'incision (6),
**en ce que** chaque incision (6) comprend un ensemble de pontages (7), comprenant au moins un pontage (8), chaque pontage (8) s'étendant à partir de la surface de fond de l'incision (6), selon la direction radiale (ZZ'), sur une hauteur radiale Hp au moins égale à 0.3 fois et au plus égale à 1 fois la hauteur radiale H_{I} de l'incision (6) et ayant une longueur L_{P}, mesurée dans un plan (XY) perpendiculaire à la direction radiale (ZZ'),
**et en ce que** l'ensemble de pontages (7) a une longueur cumulée LCp, définie comme la somme des longueurs Lp des pontages (8), au moins égale à 0.1 fois et au plus égal à 0.4 fois le périmètre fermé L_{I} de la surface débouchante (61) de l'incision (6).

2. Bande de roulement de pneumatique (1) selon la revendication 1, **dans laquelle** chaque bloc (3), comprenant au moins une incision (6), comprend une seule incision (6).

3. Bande de roulement de pneumatique (1) selon l'une des revendications 1 ou 2, la face de contact (32) du bloc (3) ayant un centre de gravité G, **dans laquelle** le périmètre fermé L_{I} de la section débouchante (61) de l'incision (6) est inscrit dans une enveloppe convexe entourant le centre de gravité G de la face de contact (32) du bloc (3).

4. Bande de roulement de pneumatique (1) selon l'une quelconque des revendications 1 à 3, **dans laquelle** le périmètre fermé L_{I} de la section débouchante (61) de l'incision (6) est un cercle.

5. Bande de roulement de pneumatique (1) selon l'une quelconque des revendications 1 à 3, la face de contact (32) du bloc (3) ayant un contour (321), **dans laquelle** le périmètre fermé L_{I} de la section débouchante (61) de l'incision (6) a une forme obtenue par un décalage du contour (321) de la face de contact (32) du bloc (3).

6. Bande de roulement de pneumatique (1) selon l'une quelconque des revendications 1 à 5, **dans laquelle** le périmètre fermé L_{I} de la section débouchante (61) de l'incision (6) a, en tout point, un rayon de courbure au moins égal à 2 fois l'épaisseur E_{I} de l'incision (6).

7. Bande de roulement de pneumatique (1) selon l'une quelconque des revendications 1 à 6, **dans laquelle** l'ensemble de pontages (7) comprend plusieurs pontages (8) identiques équirépartis selon le périmètre fermé L_{I} de la section débouchante (61) de l'incision (6).

8. Bande de roulement de pneumatique (1) selon la revendication 7, **dans laquelle** l'ensemble de pontages (7) comprend un nombre impair, au moins égal à 3, de pontages (8) identiques et équirépartis.

9. Bande de roulement de pneumatique (1) selon l'une quelconque des revendications 1 à 8, **dans laquelle** la hauteur radiale Hp de chaque pontage (8) varie entre les incisions (6) respectives de deux blocs (3) distincts.

10. Bande de roulement de pneumatique (1) selon l'une quelconque des revendications 1 à 9, la bande de roulement de pneumatique (1) comprenant, selon la direction axiale (YY'), une partie médiane (11) séparant deux parties latérales (12, 13), **dans laquelle** les blocs (3) des parties latérales (12, 13) comprennent au moins une incision (6).

11. Bande de roulement de pneumatique (1) selon l'une quelconque des revendications 1 à 10, la bande de roulement de pneumatique (1) comprenant, selon la direction axiale (YY'), une partie médiane (11) séparant deux parties latérales (12, 13), **dans laquelle** les blocs (3) de la partie médiane (11) comprennent au moins une incision (6).

12. Bande de roulement de pneumatique (1) selon l'une quelconque des revendications 1 à 11, **dans laquelle** les blocs (3) ont une hauteur radiale H au moins égale à 50 mm.

13. Bande de roulement de pneumatique (1) selon l'une quelconque des revendications 1 à 12, **dans laquelle** les blocs (3) ont un ratio H/B au moins égal à 0.3 et au plus égal à 0.7.

14. Pneumatique pour véhicule lourd de type génie civil comprenant une bande de roulement selon l'une quelconque des revendications 1 à 13.

## Patentansprüche

1. Reifenlaufstreifen (1) für ein schweres Baufahrzeug, welcher dazu bestimmt ist, über eine Lauffläche (2) mit einem Boden in Kontakt zu kommen, und aus mindestens einem elastomeren Material besteht,
wobei der Laufstreifen (1) Profilblöcke (3) umfasst, die sich von einer Bodenfläche (4) aus bis zur Lauffläche (2) in einer zur Lauffläche (2) senkrechten radialen Richtung (ZZ') erstrecken und durch Ausschnitte (5) voneinander getrennt sind, wobei jeder Block (3) von Seitenflächen (31), welche die Lauffläche (2) schneiden, und von einer Kontaktfläche (32), die zur Lauffläche (2) gehört, begrenzt wird,
wobei jeder Block (3) in der radialen Richtung (ZZ') eine radiale Höhe H und in einer Umfangsrichtung (XX'), die zur Lauffläche (2) in einer Drehrichtung des Reifens tangential ist, eine in seiner Kontaktfläche (32) gemessene mittlere Umfangslänge B aufweist,
**dadurch gekennzeichnet, dass** mindestens ein Block (3) mindestens einen Einschnitt (6) umfasst, der auf seiner Kontaktfläche (32) mündet und sich in Bezug auf seine Seitenflächen (31) innen befindet, **dadurch, dass** jeder Einschnitt (6) in der radialen Richtung (ZZ') eine von der Kontaktfläche (32) aus gemessene radiale Höhe H_{I} aufweist, die mindestens gleich dem 0,4-Fachen und höchstens gleich dem 0,9-Fachen der radialen Höhe H des Blocks (3) ist, **dadurch, dass** jeder Einschnitt (6) auf der Kontaktfläche (32) mit einer Mündungsschnittfläche (61) mündet, die einen geschlossenen Umfang L_{I}, der mindestens gleich dem 1-Fachen und höchstens gleich dem 3-Fachen der mittleren Umfangslänge B des Blocks (3) ist, und eine Dicke E_{I}, die mindestens gleich dem 0,08-Fachen und höchstens gleich dem 0,2-Fachen der radialen Höhe H_{I} des Einschnitts (6) ist, aufweist,
**dadurch, dass** jeder Einschnitt (6) eine Anordnung (7) von Überbrückungen umfasst, die mindestens eine Überbrückung (8) umfasst, wobei sich jede Überbrückung (8) von der Bodenfläche des Einschnitts (6) aus in der radialen Richtung (ZZ') über eine radiale Höhe H_{P} erstreckt, die mindestens gleich dem 0,3-Fachen und höchstens gleich dem 1-Fachen der radialen Höhe H_{I} des Einschnitts (6) ist, und eine in einer zur radialen Richtung (ZZ') senkrechten Ebene (XY) gemessene Länge L_{P} aufweist, **und dadurch, dass** die Anordnung (7) von Überbrückungen eine als die Summe der Längen L_{P} der Überbrückungen (8) definierte kumulierte Länge LC_{P} aufweist, die mindestens gleich dem 0,1-Fachen und höchstens gleich dem 0,4-Fachen des geschlossenen Umfangs L_{I} der Mündungsschnittfläche (61) des Einschnitts (6) ist.

2. Reifenlaufstreifen (1) nach Anspruch 1, **wobei** jeder Block (3), der mindestens einen Einschnitt (6) umfasst, einen einzigen Einschnitt (6) umfasst.

3. Reifenlaufstreifen (1) nach einem der Ansprüche 1 oder 2, **wobei,** wenn die Kontaktfläche (32) des Blocks (3) einen Schwerpunkt G aufweist, der geschlossene Umfang L_{I} der Mündungsschnittfläche (61) des Einschnitts (6) in eine konvexe Hülle einbeschrieben ist, die den Schwerpunkt G der Kontaktfläche (32) des Blocks (3) umgibt.

4. Reifenlaufstreifen (1) nach einem der Ansprüche 1 bis 3, **wobei** der geschlossene Umfang L_{I} der Mündungsschnittfläche (61) des Einschnitts (6) ein Kreis ist.

5. Reifenlaufstreifen (1) nach einem der Ansprüche 1 bis 3, **wobei,** wenn die Kontaktfläche (32) des Blocks (3) eine Kontur (321) aufweist, der geschlossene Umfang L_{I} der Mündungsschnittfläche (61) des Einschnitts (6) eine Form aufweist, die durch eine Verlagerung der Kontur (321) der Kontaktfläche (32) des Blocks (3) erhalten wird.

6. Reifenlaufstreifen (1) nach einem der Ansprüche 1 bis 5, **wobei** der geschlossene Umfang L_{I} der Mündungsschnittfläche (61) des Einschnitts (6) in jedem Punkt einen Krümmungsradius aufweist, der mindestens gleich dem 2-Fachen der Dicke E_{I} des Einschnitts (6) ist.

7. Reifenlaufstreifen (1) nach einem der Ansprüche 1 bis 6, **wobei** die Anordnung (7) von Überbrückungen mehrere identische Überbrückungen (8) umfasst, die entlang des geschlossenen Umfangs L_{I} der Mündungsschnittfläche (61) des Einschnitts (6) gleichmäßig verteilt sind.

8. Reifenlaufstreifen (1) nach Anspruch 7, **wobei** die Anordnung (7) von Überbrückungen eine ungerade Anzahl von identischen und gleichmäßig verteilten Überbrückungen (8) umfasst, die mindestens gleich 3 ist.

9. Reifenlaufstreifen (1) nach einem der Ansprüche 1 bis 8, **wobei** die radiale Höhe H_{P} jeder Überbrückung (8) zwischen den jeweiligen Einschnitten (6) von zwei verschiedenen Blöcken (3) variiert.

10. Reifenlaufstreifen (1) nach einem der Ansprüche 1 bis 9, **wobei,** wenn der Reifenlaufstreifen (1) in der axialen Richtung (YY') einen mittleren Teil (11) umfasst, der zwei seitliche Teile (12, 13) trennt, die Blöcke (3) der seitlichen Teile (12, 13) mindestens einen Einschnitt (6) umfassen.

11. Reifenlaufstreifen (1) nach einem der Ansprüche 1 bis 10, **wobei,** wenn der Reifenlaufstreifen (1) in der axialen Richtung (YY') einen mittleren Teil (11) umfasst, der zwei seitliche Teile (12, 13) trennt, die Blöcke (3) des mittleren Teils (11) mindestens einen Einschnitt (6) umfassen.

12. Reifenlaufstreifen (1) nach einem der Ansprüche 1 bis 11, **wobei** die Blöcke (3) eine radiale Höhe H von mindestens 50 mm aufweisen.

13. Reifenlaufstreifen (1) nach einem der Ansprüche 1 bis 12, **wobei** die Blöcke (3) ein Verhältnis H/B von mindestens 0,3 und höchstens 0,7 aufweisen.

14. Reifen für ein schweres Baufahrzeug, welcher einen Laufstreifen nach einem der Ansprüche 1 bis 13 umfasst.

## Claims

1. Tread (1) of a tyre of a heavy-duty civil engineering type vehicle, intended to come into contact with the ground via a tread surface (2) and made of at least one elastomeric material, the tread (1) comprising raised blocks (3), extending from a bottom surface (4) to the tread surface (2) in a radial direction (ZZ') perpendicular to the tread surface (2), and separated from one another by cuts (5),
each block (3) being delimited by lateral faces (31) that intersect the tread surface (2) and by a contact face (32) that forms part of the tread surface (2),
each block (3) having, in the radial direction (ZZ'), a radial height H and, in a circumferential direction (XX') tangential to the tread surface (2) in a direction of rotation of the tyre, a mean circumferential length B, measured in its contact face (32),
**characterized in that** at least one block (3) comprises at least one incision (6) opening onto its contact face (32) and inside its lateral faces (31),
**in that** each incision (6) has, in the radial direction (ZZ'), a radial height H_{I}, measured from the contact face (32), at least equal to 0.4 times and at most equal to 0.9 times the radial height H of the block (3),
**in that** each incision (6) opens onto the contact face (32) along an open section (61) having a closed perimeter L_{I} at least equal to 1 times and at most equal to 3 times the mean circumferential length B of the block (3) and a thickness E_{I} at least equal to 0.08 times and at most equal to 0.2 times the radial height H_{I} of the incision (6),
**in that** each incision (6) comprises a set of bridges (7), comprising at least one bridge (8), each bridge (8) extending from the bottom surface of the incision (6), in the radial direction (ZZ'), over a radial height Hp at least equal to 0.3 times and at most equal to 1 times the radial height H_{I} of the incision (6) and having a length Lp, measured in a plane (XY) perpendicular to the radial direction (ZZ'),
**and in that** the set of bridges (7) has a cumulative length LC_{P}, defined as being the sum of the lengths Lp of the bridges (8), at least equal to 0.1 times and at most equal to 0.4 times the closed perimeter L_{I} of the open section (61) of the incision (6).

2. Tyre tread (1) according to Claim 1, **wherein** each block (3), comprising at least one incision (6), comprises a single incision (6).

3. Tyre tread (1) according to one of Claims 1 and 2, with the contact face (32) of the block (3) having a centre of gravity G, **wherein** the closed perimeter L_{I} of the open section (61) of the incision (6) is inscribed inside a convex envelope surrounding the centre of gravity G of the contact face (32) of the block (3).

4. Tyre tread (1) according to any one of Claims 1 to 3, **wherein** the closed perimeter L_{I} of the open section (61) of the incision (6) is a circle.

5. Tyre tread (1) according to any one of Claims 1 to 3, with the contact face (32) of the block (3) having a contour (321), **wherein** the closed perimeter L_{I} of the open section (61) of the incision (6) has a shape obtained by offsetting the contour (321) of the contact face (32) of the block.(3).

6. Tyre tread (1) according to any one of Claims 1 to 5, **wherein** the closed perimeter L_{I} of the open section (61) of the incision (6) has, at every point, a radius of curvature at least equal to 2 times the thickness E_{I} of the incision (6).

7. Tyre tread (1) according to any one of Claims 1 to 6, **wherein** the set of bridges (7) comprises several identical bridges (8) evenly distributed around the closed perimeter L_{I} of the open section (61) of the incision (6).

8. Tyre tread (1) according to Claim 7, **wherein** the set of bridges (7) comprises an uneven number, at least equal to 3, of identical and uniformly distributed bridges (8).

9. Tyre tread (1) according to any one of Claims 1 to 8, **wherein** the radial height Hp of each bridge (8) varies between the respective incisions (6) of two distinct blocks (3).

10. Tyre tread (1) according to any one of Claims 1 to 9, with the tyre tread (1) comprising, in the axial direction (YY'), a median part (11) separating two lateral parts (12, 13), **wherein** the blocks (3) of the lateral parts (12, 13) comprise at least one incision (6).

11. Tyre tread (1) according to any one of Claims 1 to 10, with the tyre tread (1) comprising, in the axial direction (YY'), a median part (11) separating two lateral parts (12, 13), **wherein** the blocks (3) of the median part (11) comprise at least one incision (6).

12. Tyre tread (1) according to any one of Claims 1 to 11, **wherein** the blocks (3) have a radial height H at least equal to 50 mm.

13. Tyre tread (1) according to any one of Claims 1 to 12, **wherein** the blocks (3) have an H/B ratio at least equal to 0.3 and at most equal to 0.7.

14. Tyre for a heavy-duty civil engineering type vehicle, comprising a tread according to any one of Claims 1 to 13
